(19) Europäisches Patentamt / European Patent Office / Office européen des brevets

(11) **EP 3 636 455 B1**

(12) **EUROPEAN PATENT SPECIFICATION**

(45) Date of publication and mention of the grant of the patent:
**15.06.2022 Bulletin 2022/24**

(21) Application number: **18791627.5**

(22) Date of filing: **10.04.2018**

(51) International Patent Classification (IPC):
**B60C 11/00** (2006.01)          **B60C 11/16** (2006.01)
**B60C 1/00** (2006.01)

(52) Cooperative Patent Classification (CPC):
**B60C 1/0016; B60C 11/00; B60C 11/005;**
**B60C 11/16; B60C 11/1656;** B60C 2011/0016;
B60C 2011/0025

(86) International application number:
**PCT/JP2018/015105**

(87) International publication number:
**WO 2018/198759 (01.11.2018 Gazette 2018/44)**

(54) **TIRE RUBBER COMPOSITION**

REIFENKAUTSCHUKZUSAMMENSETZUNG

COMPOSITION DE CAOUTCHOUC POUR PNEU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.04.2017   JP 2017089794**
                     **28.04.2017   JP 2017089793**

(43) Date of publication of application:
**15.04.2020 Bulletin 2020/16**

(73) Proprietor: **The Yokohama Rubber Co., Ltd.**
**Minato-ku**
**Tokyo 105-8685 (JP)**

(72) Inventor: **HIJIKATA Kensuke**
**Hiratsuka-shi**
**Kanagawa 254-8601 (JP)**

(74) Representative: **Dilg, Haeusler, Schindelmann**
**Patentanwaltsgesellschaft mbH**
**Leonrodstraße 58**
**80636 München (DE)**

(56) References cited:
JP-A- H09 226 312          JP-A- S60 259 504
JP-A- S60 259 504          JP-A- 2016 006 139
JP-A- 2016 006 139          JP-A- 2016 047 888
JP-A- 2016 047 888          JP-A- 2016 183 268
JP-A- 2016 199 707          NO-B- 132 140

**Description**

Technical Field

The present invention relates to a rubber composition for a tire, and more particularly to a studded tire with improved stud pin retention capability and a rubber composition for a tread of the studded tire.

Background Art

In areas with severe winters such as Northern Europe and Russia, studded tires are primarily used as winter tires. In the related art, a studded tire is structured such that a plurality of implanting holes for embedding stud pins are provided in a tread portion, and stud pins are mounted in the implanting holes. The performance of the studded tire is exerted by the stud pins embedded in the tread portion; however, when the stud pins fall off or drop, the performance on snow and ice remarkably decreases. Therefore, a countermeasure against pin dropping has been an important issue. A double-flanged stud pin is often used as a countermeasure against pin dropping (for example, see JP 2010-70052 A).
Known pneumatic tires are also disclosed in NO 132140, JP S60 259504, JP 2016 183268, JP 2016 199707, JP 2016 006139, JP 2016 047888 and JP H09 226312.
In recent years, in accordance with the increase in safety awareness in the market, in addition to performance on snow and ice, wet performance and dry performance (running performance on non-icy and snowy road surfaces) of studded tires have been highly demanded. Therefore, there is a demand to prevent stud pins from falling off, i.e., to improve the performance on snow and ice, the wet performance, and the dry performance beyond conventional levels by improving pin retention capability.

Summary of Invention

Technical Problem

An object of the present invention is to provide a studded tire with enhanced stud pin retention capability and performance on snow and ice improved beyond a conventional level, and a rubber composition for the studded tire.

Solution to Problem

The present invention provides a rubber composition for a tire according to claim 1.

Advantageous Effects of Invention

The rubber composition for a tire according to an embodiment of the present invention includes the rubber component having an average glass transition temperature of -50°C or lower contains the specific carbon black and silica. 70 mass% or greater of the silica is compounded. A rubber hardness of the rubber composition at -20°C is $Hc_{M20}$, a tensile stress (MPa) of the rubber composition at 300% elongation at 23°C is Sc, and a ratio of Sc to $Hc_{M20}$ is set at a value above 9.0 and below 10.5. Thus, the stud pin retention capability can be enhanced and the performance on snow and ice and the wet performance can be improved beyond conventional levels.
The rubber composition for a tire may be provided such that 100 parts by mass of the rubber component contains 2 to 20 parts by mass of an aromatic modified terpene resin having a softening point of 60 to 150°C. The aromatic modified terpene resin is compounded and thus the wet performance can be further enhanced.
100 parts by mass of the rubber component may further contains 5 to 30 parts by mass of a liquid polymer. The liquid polymer is compounded and thus the rubber hardness at a low temperature can be further reduced and the performance on snow and ice can be further improved.
The rubber composition for a tire according to an embodiment of the present invention can preferably form a tread portion of a pneumatic tire, in particular, a tread portion of a studded tire. The stud pin retention capability of the studded tire can be further enhanced and the performance on snow and ice and the wet performance of the studded tire can be further improved.

Brief Description of Drawings

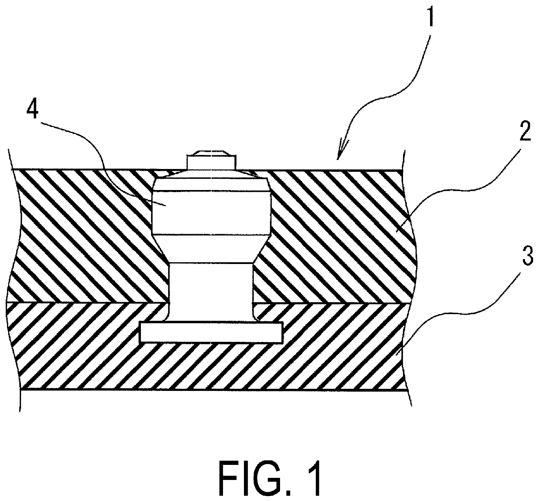

FIG.1 is a cross-sectional, enlarged view schematically illustrating a stud pin embedded in a tread portion of a studded tire of an example of an embodiment according to the present invention.

Description of Embodiments

A studded tire according to an embodiment of the present invention includes implanting holes for stud pins in a tread portion formed by disposing a cap tread on the outer circumference of an undertread, and stud pins are mounted in the implanting holes. When the implanting holes are in an expanded state, the stud pins are inserted in the implanting holes and the implanting holes are subsequently released from the expanded state, and thus the stud pins are mounted in the implanting holes.

FIG. 1 is a cross-sectional view schematically illustrating a state where a stud pin 4 is mounted in an implanting hole in a tread portion 1. The tread portion 1 is structured such that a cap tread 2 is disposed on the outer circumference (outer side in the tire radial direction) of an undertread 3. In the illustrated example, a double-flanged stud pin is described as a stud pin. Alternatively, a single-flanged stud pin may be used as a stud pin of the studded tire according to an embodiment of the present invention.

As illustrated in FIG. 1, the stud pin 4 includes a cylindrical body portion, a road contact side flange portion, a bottom side flange portion, and a tip portion. The road contact surface side flange portion is formed on the road contact surface side (outer side in the tire radial direction) of the body portion so that the diameter of the road contact surface side flange portion is greater than that of the body portion. The tip portion is made of a material harder than materials of other components so as to protrude from the road contact surface side flange portion in the pin axial direction. The bottom side flange portion is formed on the bottom side (inner side in the tire radial direction) of the body portion so that the diameter of the bottom side flange portion is greater than that of the body portion.

A rubber composition for a tire according to an embodiment of the present invention is suitably applied to configure a tread portion of a pneumatic tire, in particular, a tread portion of a studded tire. The rubber composition for a tire can be used for any of the cap tread 2 and the undertread 3 of the tread portion 1 but can suitably configure the cap tread 2.

The studded tire according to an embodiment of the present invention includes the tread portion 1 formed of the cap tread 2 and the undertread 3, and the cap tread 2 and the undertread 3 have specific relationships to each other. In other words, when the rubber hardness of the cap tread at 20°C is Hc and the tensile stress (MPa) of the cap tread at 300% elongation at 23°C is Sc, and when the rubber hardness of the undertread at 20°C is Hu and the tensile stress (MPa) of the undertread at 300% elongation at 23°C is Su, Relationships (1) to (4) below are satisfied:

$$Hc \leq 60 \qquad \cdots (1)$$

$$Hu - Hc \geq 8 \qquad \cdots (2)$$

$$Sc \geq 6.0 \qquad \cdots (3)$$

$$Su/Sc \geq 2.0 \qquad \cdots (4)$$

(in the relationships, Hc and Hu respectively represent the rubber hardness of the cap tread at 20°C and the rubber hardness of the undertread at 20°C and Sc and Su respectively represent the tensile stress (MPa) of the cap tread at 300% elongation at 23°C and the tensile stress (MPa) of the undertread at 300% elongation at 23°C.

The rubber hardness Hc of the cap tread at 20°C is 60 or less and is preferably from 50 to 58. When the rubber hardness Hc of the cap tread exceeds 60, the performance on snow and ice of the tire deteriorates. In the present specification, the rubber hardness Hc of the cap tread and the rubber hardness Hu of the undertread are referred to as rubber hardness measured in accordance with JIS K6253 with the use of a type A durometer at a temperature of 20°C.

Additionally, the tensile stress Sc of the cap tread at 300% elongation at 23°C is 5.5 MPa or greater, and is preferably from 5.8 MPa to 7.5 MPa. When the tensile stress Sc of the cap tread is below 5.5 MPa, the stud pin retention capability of the tire decreases and the dry performance deteriorates. In the present specification, the tensile stress Sc of the cap tread at 300% elongation at 23°C and the tensile stress Su of the undertread at 300% elongation at 23°C are correspond to tensile stress at 300% deformation as measured by a tensile test performed at 23°C and at 500 mm/minute in accordance with JIS K6251.

The studded tire according to an embodiment of the present invention is designed such that the rubber hardness Hc of the cap tread at 20°C and the rubber hardness Hu of the undertread at 20°C satisfy Relationship (2) below:

$$Hu - Hc \geq 8 \qquad \cdots (2)$$

(in the relationshio, Hc and Hu respectively represent the rubber hardness of the cap tread at 20°C and the rubber hardness of the undertread at 20°C).

When the difference between the rubber hardness Hc of the cap tread and the rubber hardness Hu of the undertread is below 8, the performance on snow and ice and/or dry performance of the tire deteriorates. The difference of the rubber hardness (Hu - Hc) is preferably from 10 to 16.

Additionally, the tensile stress Sc of the cap tread at 300% elongation at 23°C and the tensile stress Su of the undertread at 300% elongation at 23°C satisfy Relationship (4) below:

$$Su/Sc \geq 2.0 \qquad \cdots (4)$$

(in the relationship, Sc and Su respectively represent the tensile stress of the cap tread at 300% elongation at 23°C and the tensile stress of the undertread at 300% elongation at 23°C).

When a ratio Su/Sc of the tensile stress Su of the undertread at 300% elongation at 23°C to the tensile stress Sc of the cap tread at 300% elongation at 23°C is below 2.0, the performance on snow and ice of the tire deteriorates. The ratio Su/Sc of the tensile stress of the undertread at 300% elongation at 23°C to the tensile stress of the cap tread at 300% elongation at 23°C is preferably from 2.2 to 3.0.

The studded tire according to an embodiment of the present invention is designed such that the thickness Tc of the cap tread and the thickness Tu of the undertread are not particularly limited; however, the thickness Tc of the cap tread is preferably from 2.0 to 10.0 mm and more preferably from 3.0 to 9.0 mm. The thickness Tc of the cap tread is set within such a range; therefore, the tire can ensure the performance on snow and ice while maintaining the rolling resistance. The thickness Tu of the undertread is preferably from 2.5 to 10.0 mm and more preferably from 3.0 to 9.0 mm. The thickness Tu of the undertread is set within such a range. Thus, the tire can ensure the pin drop resistance while maintaining the rolling resistance.

Additionally, a thickness ratio Tc/(Tc + Tu) of the thickness Tc of the cap tread to a total thickness of the thickness Tc of the cap tread and the thickness Tu of the undertread is preferably from 0.35 to 0.85, more preferably from 0.40 to 0.80, even more preferably from 0.45 to 0.75. The thickness ratio Tc/(Tc + Tu) is set within such a range. Thus, the tire can achieve the performance on snow and ice and the pin drop resistance in a compatible manner while maintaining the rolling resistance.

The rubber composition for a tire, configuring the cap tread (hereinafter, will be referred to as "rubber composition for a cap tread") includes, as a rubber component, natural rubber, styrene-butadiene rubber, and butadiene rubber, and primarily contains these rubbers. The fact that the rubber composition primarily contains the rubbers means that 100 mass% of the rubber component contains a total of 50 mass% or greater of natural rubber and/or styrene-butadiene rubber and/or butadiene rubber. The rubber composition primarily contains the rubbers; therefore, the stud pin retention capability can be enhanced, and the performance on snow and ice and the wet performance can be enhanced.

From 35 to 85 mass% and more preferably from 45 to 75 mass% of natural rubber is preferably contained in 100 mass% of the rubber component. The content of natural rubber is set within such a range. Thus, the tensile break strength of the rubber composition can be improved.

Of 100 mass% of the rubber component, the total content of styrene-butadiene rubber and butadiene rubber is from 15 to 65 mass% and preferably from 25 to 55 mass%. Further, a ratio WSBR/WBR of the content of styrene-butadiene rubber $W_{SBR}$ to the content of butadiene rubber $W_{BR}$ is from 2/8 to 6/4 and preferably from 3/7 to 5/5. When the ratio WSBR/WBR of the content of styrene-butadiene rubber to the content of butadiene rubber is less than 2/8, the stud pin retention capability and the wet performance deteriorate. Furthermore, when the ratio WSBR/WBR of the content of styrene-butadiene rubber to the content of butadiene rubber exceeds 6/4, the performance on snow and ice deteriorates.

The rubber composition for a cap tread can contain rubber components other than natural rubber, styrene-butadiene rubber, and butadiene rubber. An example of other rubber components may include, for example, isoprene rubber, acrylonitrile butadiene rubber, butyl rubber, ethylene-α-olefin rubber, chloroprene rubber, and the like. The content of other rubber components is preferably from 0 to 50 mass% and more preferably from 0 to 30 mass% in 100 mass% of the rubber component.

The rubber composition for a cap tread is set such that the glass transition temperature (Tg) of the rubber component of natural rubber, styrene-butadiene rubber, and butadiene rubber is -50°C or higher, preferably -100°C to -50°C, and more preferably -90°C to -60°C. The glass transition temperature (Tg) of the rubber component is set at -50°C or lower; therefore, the studded tire can ensure flexibility in a state where the tread portion is at a low temperature, and the performance on snow and ice and the wet performance can be enhanced.

In the present specification, the glass transition temperature (Tg) of the rubber component is a total of values obtained by multiplication of the glass transition temperature of the constituent rubber components by mass fractions of the rubber components (a mass average value of glass transition temperatures). Further, the total of the mass fractions of all of the rubber components is set to 1. Furthermore, the glass transition temperature (Tg) of each of the rubber components is the glass transition temperature of a rubber component not containing an oil extended component (oil). For the glass transition temperature (Tg), a thermograph is measured by differential scanning calorimetry (DSC) at a rate of temperature increase of 20°C/minute and the temperature at the midpoint of the transition region is defined as the glass transition temperature.

The rubber composition configuring the tread portion can be obtained by compounding from 5 to 50 parts by mass, preferably from 5 to 35 parts by mass of carbon black having a nitrogen adsorption specific surface from 50 to 120 $m^2/g$ and from 5 to 100 parts by mass, preferably from 40 to 100 parts by mass of silica having a CTAB specific surface area from 80 to 190 $m^2/g$ into 100 parts by mass of the aforementioned rubber component. Additionally, a total of 100 mass% of filler including the carbon black and the silica is occupied by 70 mass% or greater of the silica.

The nitrogen adsorption specific surface area of the carbon black is from 50 to 120 $m^2/g$ and preferably from 70 to 110 $m^2/g$. When the nitrogen adsorption specific surface area of the carbon black is below 50 $m^2/g$, the pin drop resistance deteriorates. Further, dry braking ability may deteriorate. When the nitrogen adsorption specific surface area of the carbon black exceeds 120 $m^2/g$, heat build-up of the rubber component may deteriorate. In this specification, the nitrogen adsorption specific surface area of the carbon black is measured on the basis of JIS K6217-2.

From 5 to 50 parts by mass, preferably from 5 to 35 parts by mass, and more preferably from 5 to 30 parts by mass of the carbon black is compounded into 100 parts by mass of the rubber component. When the compounded amount of the carbon black is below 5 parts by mass, the desirable black colored rubber composition cannot be obtained. When the compounded amount of the carbon black exceeds 50 parts by mass, the heat buildup of the rubber composition deteriorates.

The CTAB specific surface area of the silica is from 80 to 190 $m^2/g$ and preferably from 100 to 180 $m^2/g$. When the CTAB specific surface area of the silica is less than 80 $m^2/g$, the wet performance and the dry braking ability may deteriorate. When the CTAB specific surface area of the silica exceeds 190 $m^2/g$, the heat buildup of the rubber composition may deteriorate. In this specification, the CTAB specific surface area of the silica is measured on the basis of JIS K6217-3.

From 5 to 10 parts by mass, preferably from 40 to 100 parts by mass, and more preferably from 45 to 95 parts by mass of the silica is compounded into 100 parts by mass of the rubber component. When the compounded amount of the silica is less than 40 parts by mass, the rubber hardness of the rubber composition may decrease. When the compounded amount of the silica is less than 5 parts by mass, the heat build-up may deteriorate. When the compounded amount of the silica exceeds 100 parts by mass, the extrudability of the rubber composition deteriorates.

In addition, a total of 100 mass% of the filler including the carbon black and the silica may contain preferably 70 mass% or greater, more preferably 70 to 95 mass%, even more preferably 72 to 93 mass%, and particularly preferably from 74 to 90 mass% of the silica. When the content of the silica in the total 100 mass% of the filler is less than 70 mass%, the wet performance may deteriorate.

A silane coupling agent may be compounded into the rubber composition for a cap tread. The silane coupling agent is compounded, and thus the dispersibility of the silica to the rubber component can be improved and the reinforcing property with the rubber can be enhanced.

From 3 to 15 mass% of the silane coupling agent may be compounded with respect to the compounded amount of the silica, and more preferably, from 5 to 10 mass% of the silane coupling agent may be compounded with respect to the compounded amount of the silica. When the compounded amount of the silane coupling agent is less than 3 mass% with respect to the compounded amount of the silica, the dispersibility of the silica cannot be sufficiently improved. When the compounded amount of the silane coupling agent exceeds 15 parts by mass with respect to the compounded amount of the silica, the desirable hardness, strength, or wear resistance can be obtained.

The type of silane coupling agent is not particularly limited as long as the silane coupling agent is usable in the rubber composition containing silica. An example of the type of silane coupling agent may include sulfur-containing silane coupling agents such as bis (3-triethoxysilylpropyl) tetrasulfide, bis (3-triethoxysilylpropyl) disulfide, 3-trimethoxysilylpropyl benzothiazole tetrasulfide, γ-mercaptopropyl triethoxysilane, and 3-octanoylthiopropyl triethoxysilane.

The rubber composition for a cap tread may also contain different fillers other than carbon black and silica as long as the rubber composition does not impair the object of the present invention. Examples of the other fillers include clay, mica, talc, calcium carbonate, aluminum hydroxide, aluminum oxide, and titanium oxide.

In the present invention, when the rubber hardness of the rubber composition for a tire at -20°C is $Hc_{M20}$ and the tensile stress (MPa) of the rubber composition for a tire at 300% elongation at 23°C is Sc, Relationship (5) is satisfied.

$$9.0 < Hc_{M20}/Sc < 10.5 \qquad \cdots (5)$$

(In the relationship, $Hc_{M20}$ represents the rubber hardness of the rubber composition for a tire at -20°C and Sc represents the tensile stress (MPa) of the rubber composition for a tire at 300% elongation at 23°C.)

When the ratio $Hc_{M20}$/Sc of the rubber hardness $Hc_{M20}$ at -20°C to the tensile stress Sc at 300% elongation at 23°C is 9 or less, the performance on snow and ice deteriorates. In addition, when the ratio $Hc_{M20}$/Sc is 10.5 or greater, the pin drop resistance deteriorates. The ratio $Hc_{M20}$/Sc is preferably from 9.3 to 10.3, and is more preferably from 9.5 to 10.0.

The rubber hardness $Hc_{M20}$ of the rubber composition for a tire at - 20°C is not particularly limited as long as the rubber hardness $Hc_{M20}$ satisfies Relationship (5) above; however, the rubber hardness $Hc_{M20}$ is preferably from 48 to 65, and is more preferably from 51 to 62. The rubber hardness $Hc_{M20}$ is within such a range; therefore, the performance on snow and ice and the dry performance can be provided at a high level. In the present specification, the rubber hardness $Hu_{M20}$ refers to the rubber hardness measured at a temperature of 20°C with the use of a type A durometer in accordance with JIS K6253.

The tensile stress Sc of the rubber composition for a tire at 300% elongation at 23°C is not particularly limited as long as the tensile stress Sc satisfies Relationship (5) above; however, tensile stress Sc is preferably from 5.0 to 8.0 MPa, and is more preferably from 5.5 to 7.5 MPa. The tensile stress Sc is within such a range; therefore, the tire can achieve the excellent performance on snow and ice while ensuring the pin drop resistance. In the present specification, the tensile stress Sc at 300% elongation at 23°C refers to the tensile stress at 300% deformation when a tensile test is performed at 23°C and at 500 mm/minute in accordance with JIS K6251.

The rubber composition for a cap tread may contain an aromatic modified terpene resin having a softening point from 60 to 150°C; therefore, preferably, the wet performance can be further improved. This may be because the aromatic modified terpene resin improves the dispersibility of filler such as silica, carbon black, and the like, and the compatibility between the filler and the rubber component.

An aromatic modified terpene resin having a softening point of preferably from 60 to 150°C, preferably from 80 to 130°C may be applied as the aromatic modified terpene resin. When the softening point of the aromatic modified terpene resin is below 60°C, the effect of improving the wet performance may not be sufficiently obtained. When the softening point exceeds 150°C, the heat build-up deteriorates and thus the rolling resistance increases. In the present specification, the softening point of the aromatic modified terpene resin is measured in accordance with JIS K6220-1 (ring and ball method).

The aromatic modified terpene resin is preferably an aromatic modified terpene resin obtained by polymerizing a terpene such as α-pinene, β-pinene, dipentene, or limonene, and at least one aromatic compound of styrene, α-methylstyrene, or vinyl toluene.

The content of the aromatic modified terpene resin may be from 2 to 20 parts by mass and more preferably from 5 to 15 parts by mass per 100 parts by mass of the rubber component. When the content of the aromatic modified terpene resin is less than 2 parts by mass, the effect of improving the wet performance cannot be sufficiently obtained. When the content of the aromatic modified terpene resin exceeds 20 parts by mass, the performance on snow and ice may deteriorate.

The rubber composition for a tire according to an embodiment of the present invention preferably includes a liquid polymer, and thus the hardness of rubber at a low temperature can be further reduced and the performance on snow and ice can be further improved. An example of the liquid polymer may include, for example, liquid polybutene, liquid polyisobutene, liquid polyisoprene, liquid polybutadiene, liquid poly α-olefin, liquid isobutylene, liquid ethylene α-olefin copolymer, liquid ethylene propylene copolymer, liquid ethylene butylene copolymer, and the like. The liquid polymer may also be a modified product of the aforementioned liquid polymer (maleic acid modification, terminal isocyanate modification, epoxy modification, or the like).

The content of the liquid polymer may be preferably from 3 to 30 parts by mass and more preferably from 5 to 25 parts by mass per 100 parts by mass of the rubber component. When the content of the liquid polymer is less than 3 parts by mass, the effect of improving the performance on snow and ice cannot be sufficiently obtained. When the content of the liquid polymer exceeds 30 parts by mass, the tensile break strength may deteriorate.

In the present invention, the rubber composition for a tire, which configures the undertread (hereinafter will be referred to as "rubber composition for an undertread") is not particularly limited as long as the rubber composition is used in an undertread of a studded tire. Preferably, from 50 to 100 parts by mass of carbon black is compounded into 100 parts by mass of a rubber component including from 15 to 85 mass% of natural rubber and/or isoprene rubber and from 15 to 85 mass% of butadiene rubber and/or styrene-butadiene rubber. Further, the carbon black may have a nitrogen adsorption specific surface area ($N_2SA$) of preferably from 25 to 120 $m^2/g$.

The rubber composition for a cap tread and the rubber composition for an undertread may contain various compounding agents such as a vulcanization or crosslinking agent, a vulcanization accelerator, an antiaging agent, a plasticizer, a processing aid, a liquid polymer, and a thermosetting resin that are commonly used in a rubber composition for a tread. These compounding agents can be kneaded by a common method to obtain a composition that can then be used for vulcanization or crosslinking. These compounding agents can be compounded in typical amounts conventionally used so long as the objects of the present invention are not hindered. The rubber composition for a tread can be produced by kneading and mixing the aforementioned components with the use of a known rubber kneading machine such as a Banbury mixer, a kneader, a roller, or the like. The prepared rubber composition can be used in the tread portion of a studded tire and vulcanization-molded by an ordinary method.

The present invention is further explained below by examples. However, the scope of the present invention is not limited to these examples.

Example

Components, excluding sulfur and a vulcanization accelerator, of six types of rubber compositions (compositions A to F) for a tire tread made of the contents indicated in Table 1 were kneaded for five minutes with a 1.8 sealed mixer, and then the mixture was discharged and cooled. Subsequently, sulfur and a vulcanization accelerator were added to the mixture and the mixture was kneaded with an open roll. Thus, the six types of rubber compositions were prepared.

The obtained six types of rubber compositions were press-vulcanized at 170°C for 10 minutes in a predetermined mold to produce test pieces made of the rubber compositions for a tread. The rubber hardness of the obtained test pieces at 20°C and the tensile stress of the test pieces at 300% elongation at 23°C were measured in accordance with the method described below.

Rubber hardness

The rubber hardness of each of the test piece was measured in accordance with JIS K6253 at a temperature of 20°C with the use of a type A durometer. The obtained results are indicated in the "Rubber hardness Hc or Hu" row of Table 1.

Tensile Stress at 300% elongation

A dumbbell-shaped JIS No. 3 test piece was cut out of the obtained test pieces in accordance with JIS K6251. The tensile stress at the time of 300% deformation was measured by a tensile test performed at 500 mm/min at 23°C in accordance with JIS K6251. The obtained results are indicated in the "Stress Sc or Su at 300%" row of Table 1.

Additionally, studded tires were molded by vulcanization. The obtained six types of rubber compositions for a cap tread and an undertread were combined as indicated in Table 2 to be used in a cap tread and an undertread of each of the studded tires. Stud pins were mounted in implanting holes in a tread portion of the obtained tire. The obtained studded tire was mounted on a 2000 cc class FF vehicle, and pin drop resistance, dry braking ability, and braking ability on ice and snow of the tire were evaluated by the following methods.

Pin Drop Resistance

A vehicle on which the studded tires were mounted was driven 20000 km on dry road surfaces including an asphalt road surface and a concrete road surface. The number of stud pins that had dropped from the treads of the pneumatic tires after driving was counted. The obtained results are indicated in the "Pin drop resistance" row of Table 2 in such a manner that the inverse of the number of dropped stud pins was calculated to be represented by an index value with the value of Standard Example 1 being assigned 100. A larger index value indicates that fewer stud pins were dropped and indicates superior pin drop resistance.

Wet Braking Ability

A vehicle on which the studded tires were mounted was driven on dray road surfaces, and the braking distance required to completely stop the vehicle by braking the vehicle running at an initial speed of 30 km/hour was measured. The obtained results are indicated in the "dry braking ability" row of Table 2 in such a manner that the inverse of the breaking distance is calculated to be represented by an index value with the value of Standard Example 1 being assigned 100. A larger index value indicates a shorter braking distance at the time of driving on dry road surfaces and superior wet performance.

Braking Ability on Ice

A vehicle on which the studded tires were mounted was driven on icy roads, and the braking distance required to completely stop the vehicle by braking the vehicle running at an initial speed of 30 km/hour was measured. The obtained results are indicated in the "Braking ability on ice" row of Table 2 in such a manner that the inverse of the braking distance was calculated to be represented by an index value with the value of Standard Example 1 being assigned 100. A larger index value indicates a shorter braking distance at the time of driving on icy roads and superior performance on ice.

[Table 1]

| | | Rubber composition for cap tread | | | Rubber composition for undertread | | |
|---|---|---|---|---|---|---|---|
| | | Composition A | Composition B | Composition C | Composition D | Composition E | Composition F |
| NR | Part by mass | 40 | 40 | 40 | 30 | 30 | 30 |
| SBR | Part by mass | 30 | 30 | 30 | 40 | 40 | 40 |
| BR | Part by mass | 30 | 30 | 30 | 30 | 30 | 30 |
| CB-1 | Part by mass | 5 | 5 | 15 | | | |
| CB-2 | Part by mass | | | | 60 | 60 | 50 |
| Silica-1 | Part by mass | 65 | 65 | 65 | | | |
| Coupling agent | Part by mass | 5.2 | 5.2 | 5.2 | | | |
| Process oil | Part by mass | 30 | 40 | 20 | 10 | 15 | 13 |
| Stearic acid | Part by mass | 2.0 | 2 | 2 | 1 | 1 | 1 |
| Zinc oxide | Part by mass | 4.0 | 4 | 4 | 3 | 3 | 3 |
| Sulfur | Part by mass | 1.5 | 1.5 | 1.5 | 2.2 | 2.2 | 2.2 |
| Vulcanization accelerator-1 | Part by mass | 2.0 | 2 | 2 | | | |
| Vulcanization accelerator-2 | Part by mass | 1.0 | 1 | 1 | | | |
| Vulcanization accelerator-3 | Part by mass | | | | 1 | 1.5 | 1.5 |
| Average Tg of rubber component | °C | (74) | (74) | (74) | (73) | (73) | (73) |
| Rubber hardness Hc or Hu | - | 55 | 51 | 62 | 65 | 64 | 63 |
| Stress Sc or Su at 300% | MPa | 6.5 | 5.3 | 7.4 | 11.8 | 14.0 | 13.7 |

The types of raw materials used in Table 1 are described below.

- NR: Natural rubber, STR20 available from BON BUNDIT, glass transition temperature: -65°C
- BR: Butadiene rubber; Nipol BR1220, available from Zeon Corporation, glass transition temperature: -110°C
- SBR: styrene-butadiene rubber, Nipol 1502, available from ZEON CORPORATION, glass transition temperature: -54°C
- CB-1: carbon black, Show Black N339, available from Cabot Japan K.K, nitrogen adsorption specific surface area: 93 m$^2$/g
- CB-2: carbon black, Cabot Japan 550, available from Cabot Japan K.K., nitrogen adsorption specific surface area: ace area: 43 m$^2$/g
- Silica-1: silica, ZEOSIL 1165MP, available from Solvay SA, CTAB specific surface area: 156 m$^2$/g
- Coupling agent: silane coupling agent, Si 69, available from Evonik Degussa GmbH
- Liquid polymer: liquid polybutadiene, Ricon130, available from Cray Varey SA
- Process oil: Extract No. 4S, available from Showa Shell Sekiyu K.K.
- Stearic acid: Stearic acid 50S, available from Nippon Oil & Fats Co., Ltd.
- Zinc oxide: Zinc Oxide III, available from Seido Chemical Industry Co., Ltd.
- Sulfur: oil treated sulfur, available from Hosoi Chemical Industry Co., Ltd.
- Vulcanization accelerator 1: Nocceler CZ-G, available from Ouchi Shinko Chemical Industrial Co., Ltd.
- Vulcanization accelerator 2: Soxinol D-G available from Sumitomo Chemical Co., Ltd.
- Vulcanization accelerator 3: Nocceler NS-P, available from Ouchi Shinko Chemical Industrial Co., Ltd.

[Table 2]

| | | Standard Example 1 | Example 1 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Cap tread | Type of rubber composition | Composition A | Composition A | Composition A | Composition B | Composition B | Composition B | Composition C | Composition C | Composition C |
| | Rubber hardness Hc | 56 | 56 | 56 | 51 | 51 | 51 | 62 | 62 | 62 |
| | Stress Sc at 300% (MPa) | 6.5 | 6.5 | 6.5 | 5.3 | 5.3 | 5.3 | 7.4 | 7.4 | 7.4 |
| Undertread | Type of rubber composition | Composition D | Composition E | Composition F | Composition D | Composition E | Composition F | Composition D | Composition E | Composition F |
| | Rubber hardness Hu | 65 | 64 | 63 | 65 | 64 | 63 | 65 | 64 | 63 |
| | Stress Su at 300% (MPa) | 11.8 | 14.0 | 13.7 | 11.8 | 14.0 | 13.7 | 11.8 | 14.0 | 13.7 |
| Rubber hardness difference Hu - Hc | | 9 | 8 | 7 | 14 | 13 | 12 | 3 | 2 | 1 |
| Stress ratio Su/Sc at 300% | | 1.8 | 2.2 | 2.1 | 2.2 | 2.6 | 2.6 | 1.6 | 1.9 | 1.9 |
| Pin drop resistance | (index value) | 100 | 112 | 108 | 88 | 96 | 93 | 109 | 123 | 120 |
| Dry braking ability | (index value) | 100 | 103 | 96 | 90 | 92 | 88 | 108 | 110 | 109 |
| Braking ability on ice | (index value) | 100 | 100 | 100 | 108 | 107 | 108 | 89 | 88 | 89 |

As is clear from Table 2, it was revealed that a studded tire according to Example 1 has high stud pin retention capability and is superior in dry performance and performance on snow and ice.

The rubber composition of Comparative Example 1 is such that the rubber hardness difference Hu - Hc is less than 8; therefore, the dry braking ability is poor.

The rubber compositions of Comparative Examples 2 to 4 are such that the tensile stress Sc at 300% elongation at 23°C is less than 5.5 MP; therefore, the pin drop resistance and the dry braking ability are poor.

The rubber compositions of Comparative Examples 5 to 7 are such that the rubber hardness Hc of the cap tread exceeds 60, that the rubber hardness difference Hu - Hc is less than 8, and that the tensile stress ratio Su/Sc at 300% elongation is less than 2.0; therefore, the performance on snow and ice is poor.

Using the common amount of compounding agents indicated in Table 5, components, excluding sulfur and a vulcanization accelerator, of sixteen types of rubber compositions indicated in Tables 3 and 4 (Examples 2 to 9, Standard Example 2, and Comparative Examples 8 to 14) were kneaded for five minutes with a 1.8 sealed mixer, and then the mixture was discharged and cooled. Subsequently, sulfur and a vulcanization accelerator were added to the mixture and the mixture was kneaded with an open roll. Thus, the sixteen types of rubber compositions were prepared. Furthermore, the compounded amounts of the compounding agents indicated in Table 5 are represented by parts by mass per 100 parts by mass of the rubber component indicated in Tables 3 and 4.

The obtained sixteen types of rubber compositions were press-vulcanized at 170°C for 10 minutes in a predetermined mold to produce test pieces made of the rubber compositions for a tire. The rubber hardness ($Hc_{M20}$) at -20°C, the tensile stress (Sc (MPa)) at 300% elongation at 23°C, and the heat build-up ($\tan\delta$ at 60°C) of the obtained test pieces were measured in accordance with the methods described below.

Rubber hardness at -20°C

The rubber hardness of the test pieces was measured in accordance with JIS K6253 with the use of a type A durometer at a temperature of -20°C. The obtained results are indicated in the "Rubber hardness $Hc_{M20}$" rows of Tables 3 and 4.

Tensile stress at 300% elongation at 23°C

A dumbbell-shaped JIS No. 3 test piece was cut out of the obtained test pieces in accordance with JIS K6251. Tensile tests at 23°C and at 500 mm/min were performed in accordance with JIS K 6251, and tensile stress (Sc (MPa) at 300% deformation was measured. The obtained results are indicated in the "Stress Su at 300%" rows of Tables 3 and 4.

Heat build-up (tan $\delta$ at 60°C)

Dynamic viscoelasticity of the obtained test pieces were measured at an initial strain of 10%, an amplitude of $\pm2\%$, and a frequency of 20 Hz with the use of a viscoelastic spectrometer available from Toyo Seiki Seisakusho, Ltd., and the tan $\delta$ at a temperature of 60°C was calculated. The obtained results are represented by index values with the value of Comparative Example 2 being assigned 100 and are indicated in the "Heat build-up" rows in Tables 3 and 4. A smaller index value indicates lower heat build-up and superior fuel consumption performance when a tire is produced.

Additionally, studded tires in which the obtained sixteen types of rubber compositions were used in cap treads were molded by vulcanization, and stud pins were mounted in implanting holes in a tread portion of each of the tires. The obtained studded tire was mounted on a 2000 cc class FF vehicle, and pin drop resistance, wet braking ability, and braking ability on ice and snow were evaluated by the following methods.

Pin drop resistance

A vehicle on which the studded tires were mounted was driven 20000 km on dry road surfaces including an asphalt road surface and a concrete road surface. The number of stud pins that had dropped from the treads of the pneumatic tires after driving was counted. The obtained results are indicated in the "Pin drop resistance" rows of Tables 3 and 4 in such a manner that the inverse of the number of dropped stud pins is calculated to be represented by an index value with the value of Standard Example 2 being assigned 100. A larger index value indicates that fewer stud pins were dropped and indicates superior pin drop resistance.

Wet braking ability

A vehicle on which the studded tires were mounted was driven on road surfaces applied with water, and the braking distance required to completely stop the vehicle by braking the vehicle running at an initial speed of 30 km/hour was measured. The obtained results are indicated in the "Wet performance" rows of Tables 3 and 4 in such a manner that the inverse of the braking distance is calculated to be represented by an index value with the value of Comparative Example 2 being assigned 100. A larger index value indicates a shorter braking distance at the time of driving on wet surfaces and superior wet performance.

Braking ability on ice

A vehicle on which the studded tires were mounted was driven on icy roads, and the braking distance required to completely stop the vehicle by braking the vehicle running at an initial speed of 30 km/hour was measured. The obtained results are indicated in the "Braking ability on ice" rows of Tables 3 and 4 in such a manner that the inverse of the braking distance is calculated to be represented by an index value with the value of Comparative Example 2 being assigned 100. A larger index value indicates a shorter braking distance at the time of driving on icy roads and superior performance on ice.

[Table 3]

| | | Standard Example 2 | Comparative Example 8 | Comparative Example 9 | Example 2 | Example 3 | Example 4 | Example 5 | Example 6 |
|---|---|---|---|---|---|---|---|---|---|
| NR | Part by mass | 40 | 70 | 40 | 40 | 40 | 40 | 30 | 50 |
| SBR | Part by mass | 30 | | 60 | 30 | 30 | 30 | 35 | 25 |
| BR | Part by mass | 30 | 30 | | 30 | 30 | 30 | 35 | 25 |
| CB-1 | Part by mass | 35 | 15 | 15 | 15 | 5 | 15 | 15 | 15 |
| CB-2 | Part by mass | | | | | | | | |
| CB-3 | Part by mass | | | | | | | | |
| Silica-1 | Part by mass | 35 | 55 | 55 | 55 | 65 | 55 | 55 | 55 |
| Silica-2 | Part by mass | | | | | | | | |
| Coupling agent | Part by mass | 2.8 | 4.4 | 4.4 | 4.4 | 5.2 | 4.4 | 4.4 | 4.4 |
| Aromatic modified terpene resin | Part by mass | | | | | | | | |
| Process oil | Part by mass | 30 | 30 | 30 | 30 | 30 | 20 | 30 | 30 |
| Vulcanization accelerator-1 | Part by mass | 1.8 | 1.8 | 1.8 | 1.8 | 2.0 | 1.8 | 1.8 | 1.8 |
| Vulcanization accelerator-2 | Part by mass | 0.3 | 0.8 | 0.8 | 0.8 | 1.0 | 0.8 | 0.8 | 0.8 |
| Ratio of Silica | (Mass %) | (50) | (79) | (79) | (79) | (93) | (79) | (79) | (79) |
| Average Tg of rubber component | °C | (74) | (77) | (58) | (74) | (74) | (74) | (76) | (73) |

(continued)

| | | Standard Example 2 | Comparative Example 8 | Comparative Example 9 | Example 2 | Example 3 | Example 4 | Example 5 | Example 6 |
|---|---|---|---|---|---|---|---|---|---|
| Stress Sc at 300% | MPa | 6.5 | 6.2 | 7 | 6.7 | 6.5 | 6.7 | 6.9 | 6.4 |
| Rubber hardness $Hc_{M20}$ | - | 61 | 60 | 63 | 60 | 59 | 61 | 62 | 60 |
| Ratio $Hc_{M20}/Sc$ | - | 9.4 | 9.7 | 9.0 | 9.0 | 9.1 | 9.1 | 9.0 | 9.4 |
| Heat build-up | Index value | 100 | 91 | 108 | 96 | 94 | 97 | 98 | 96 |
| Pin drop resistance | Index value | 100 | 96 | 102 | 103 | 100 | 103 | 105 | 103 |
| Wet braking ability | Index value | 100 | 94 | 110 | 108 | 111 | 115 | 112 | 110 |
| Braking ability on ice | Index value | 100 | 102 | 93 | 103 | 105 | 102 | 101 | 100 |

[Table 4]

| | | Example 7 | Example 8 | Example 9 | Comparative Example 10 | Comparative Example 11 | Comparative Example 12 | Comparative Example 13 | Comparative Example 14 |
|---|---|---|---|---|---|---|---|---|---|
| NR | Part by mass | 40 | 40 | 40 | 40 | 40 | 40 | 40 | 40 |
| SBR | Part by mass | 36 | 24 | 30 | 30 | 30 | 30 | 30 | 30 |
| BR | Part by mass | 24 | 36 | 30 | 30 | 30 | 30 | 30 | 30 |
| CB-1 | Part by mass | 15 | 15 | 15 | 15 | | | 15 | 15 |
| CB-2 | Part by mass | | | | | 15 | | | |
| CB-3 | Part by mass | | | | | | 15 | | |
| Silica-1 | Part by mass | 55 | 55 | 55 | | 55 | 55 | 55 | 55 |
| Silica-2 | Part by mass | | | | 55 | | | | |
| Coupling agent | Part by mass | 4.4 | 4.4 | 4.4 | 4.4 | 4.4 | 4.4 | 4.4 | 4.4 |
| Liquid polymer | Part by mass | | | 10 | | | | | |
| Process oil | Part by mass | 30 | 30 | 20 | 30 | 30 | 30 | 30 | 30 |
| Vulcanization accelerator-1 | Part by mass | 1.8 | 1.8 | 1.8 | 1.8 | 1.8 | 1.8 | 1.8 | 1.8 |
| Vulcanization accelerator-2 | Part by mass | 0.8 | 0.8 | 0.8 | 0.8 | 0.8 | 0.8 | 0.8 | |
| Ratio of Silica | (Mass %) | (79) | (79) | (79) | (79) | (79) | (79) | (79) | (79) |

(continued)

| | | Example 7 | Example 8 | Example 9 | Comparative Example 10 | Comparative Example 11 | Comparative Example 12 | Comparative Example 13 | Comparative Example 14 |
|---|---|---|---|---|---|---|---|---|---|
| Average Tg of rubber component | °C | (71) | (77) | (74) | (74) | (74) | (74) | (74) | (74) |
| Stress Sc at 300% | MPa | 6.8 | 6.5 | 7 | 6.1 | 6.4 | 5.8 | 7.2 | 5.2 |
| Rubber hardness $Hc_{M20}$ | - | 62 | 60 | 63 | 60 | 62 | 57 | 63 | 58 |
| Ratio $Hc_{M20}$/Sc | - | 9.1 | 9.2 | 9.0 | 9.8 | 9.7 | 9.8 | 8.8 | 11.2 |
| Heat build-up | Index value | 98 | 95 | 94 | 100 | 106 | 92 | 94 | 100 |
| Pin drop resistance | Index value | 104 | 103 | 107 | 94 | 98 | 96 | 110 | 92 |
| Wet braking ability | Index value | 113 | 106 | 114 | 113 | 109 | 100 | 110 | 102 |
| Braking ability on ice | Index value | 100 | 107 | 103 | 102 | 100 | 107 | 94 | 108 |

The types of raw materials used in Tables 3 and 4 are described below.

- NR: Natural rubber, STR20 available from BON BUNDIT, glass transition temperature: -65°C
- BR: Butadiene rubber; Nipol BR1220, available from Zeon Corporation, glass transition temperature: -110°C
- SBR: styrene-butadiene rubber, Nipol 1502, available from ZEON CORPORATION, glass transition temperature: -54°C
- CB-1: carbon black, Show Black N339, available from Cabot Japan K.K, nitrogen adsorption specific surface area: 93 $m^2$/g
- CB-2: carbon black, SEAST 9, available from Tokai Carbon Co., Ltd., nitrogen adsorption specific surface area: 142 $m^2$/g
- CB-3: carbon black, Show Black N550, available from Cabot Japan K.K., nitrogen adsorption specific surface area: 43 $m^2$/g
- Silica-1: silica, ZEOSIL 1165MP, available from Solvay SA, CTAB specific surface area: 156 $m^2$/g
- Silica-2: silica, ZEOSIL Premium 200MP, available from Solvay SA, CTAB specific surface area: 197 $m^2$/g
- Coupling agent: silane coupling agent, Si 69, available from Evonik Degussa GmbH
- Aromatic modified terpene resin: YS Resin TO-125, available from Yasuhara Chemical Co., Ltd., softening point: 125°C
- Liquid polymer: liquid polybutadiene, Ricon130, available from Cray Varey SA
- Process oil: Extract No. 4S, available from Showa Shell Sekiyu K.K.
- Vulcanization accelerator 1: Nocceler-CZ-G, available from Ouchi Shinko Chemical Industrial Co., Ltd.
- Vulcanization accelerator 2: Soxinol D-G available from Sumitomo Chemical Co., Ltd.

[Table 5]

| Common amount contained in rubber composition for tire | | |
|---|---|---|
| Stearic acid | 2.0 | Part by mass |
| Zinc oxide | 4.0 | Part by mass |
| Sulfur | 1.5 | Part by mass |

The types of raw materials used as indicated in Table 5 are described below.

- Stearic acid: Stearic acid 50S, available from Nippon Oil & Fats Co., Ltd.
- Zinc oxide: Zinc Oxide III, available from Seido Chemical Industry Co., Ltd.
- Sulfur: oil treated sulfur, available from Hosoi Chemical Industry Co., Ltd.

As is clear from Tables 3 and 4, it was revealed that studded tires according to Examples 2 to 9 have high stud pin retention capability and are superior in wet performance and performance on snow and ice.

As is clear from Table 3, the rubber composition of Comparative Example 8 does not contain styrene-butadiene rubber; therefore, the pin drop resistance and wet performance are poor. The rubber composition of Comparative Example 9 does not contain butadiene rubber; therefore, the performance on snow and ice is poor.

As is clear from Table 4, the rubber composition of Comparative Example 10 is such that the CTAB specific surface area of silica-2 exceeds 190 $m^2$/g; therefore, the pin drop resistance is poor. The rubber composition of Comparative Example 11 is such that the nitrogen adsorption specific surface area of carbon black exceeds 120 $m^2$/g; therefore, the heat build-up is high and the pin drop resistance is poor. The rubber composition of Comparative Example 12 is such that the nitrogen adsorption specific surface area of carbon black is less than 50 $m^2$/g; therefore, the pin drop resistance is poor.

The rubber composition of Comparative Example 13 is such that tensile stress at 300% elongation at 23°C excessively increases as the amount of the vulcanization accelerator increases and the ratio $Hc_{M20}$/Sc is 9.0 or less; therefore, the performance on snow and ice is poor.

The rubber composition of Comparative Example 14 is such that tensile stress at 300% elongation at 23°C excessively decreases and the ratio $Hc_{M20}$/Sc is 10.5 or greater; therefore, the pin drop resistance is poor.

Reference Signs List

1 Tread portion
2 Cap tread
3 Undertread
4 Stud pin

**Claims**

1. A rubber composition for a tire, comprising:

   100 parts by mass of a rubber component containing natural rubber, butadiene rubber and styrene-butadiene rubber, the total content of styrene-butadiene rubber and butadiene rubber is from 15 to 65 mass% and the ratio $W_{SBR}/W_{BR}$ of the content of styrene-butadiene rubber $W_{SBR}$ to the content of butadiene rubber $W_{BR}$ is from 2/8 to 6/4,
   the rubber component containing from 5 to 35 parts by mass of carbon black having a nitrogen adsorption specific surface area from 50 to 120 m$^2$/g, and from 40 to 100 parts by mass of silica having a CTAB specific surface area from 80 to 190 m$^2$/g, wherein
   a total of 100 mass% of filler containing the carbon black and the silica contains 70 mass% or greater of the silica, an average glass transition temperature of the rubber component is -50°C or lower, a rubber hardness at -20°C is Hc$_{M20}$, and a tensile stress (MPa) at 300% elongation at 23°C is Sc; and Relationship (5) is satisfied:

$$9.0 < Hc_{M20}/Sc < 10.5 \qquad \cdots (5)$$

   where Hc$_{M20}$ represents the rubber hardness of the rubber composition for a tire at -20°C and Sc represents the tensile stress (MPa) of the rubber composition for a tire at 300% elongation at 23°C, wherein the rubber hardness at -20°C is measured in accordance with JIS K6253 with the use of a type A durometer at a temperature of -20°C.

2. The rubber composition for a tire according to claim 1, wherein 100 parts by mass of the rubber component contains from 2 to 20 parts by mass of an aromatic modified terpene resin having a softening point from 60 to 150°C.

3. The rubber composition for a tire according to claim 1 or 2, wherein 100 parts by mass of the rubber component further contains from 5 to 30 parts by mass of a liquid polymer.

4. A studded tire comprising a tread portion comprising the rubber composition for a tire according to any one of claims 1 to 3.

**Patentansprüche**

1. Gummizusammensetzung für einen Reifen, umfassend:

   zu 100 Massenteilen eine Gummikomponente, die Naturkautschuk, Butadien-Kautschuk und Styrol-Butadien-Kautschuk enthält, wobei der Gesamtgehalt an Styrol-Butadien-Kautschuk und Butadien-Kautschuk von 15 bis 65 Masse-% beträgt und das $W_{SBR}$:$W_{BR}$-Verhältnis des Gehalts an Styrol-Butadien-Kautschuk $W_{SBR}$ zum Gehalt an Butadien-Kautschuk $W_{BR}$ von 2:8 bis 6:4 beträgt, wobei der Kautschukbestandteil zu 5 bis 35 Massenteilen Ruß mit einer stickstoffadsorptionsspezifischen Oberfläche von 50 bis 120 m$^2$/g, und zu 40 bis 100 Massenteilen Silica mit einer CTAB-spezifischen Oberfläche von 80 bis 190 m$^2$/g enthält, wobei
   insgesamt der Füllstoff zu 100 Masse-% den Ruß enthält, und das Silica zu 70 Masse-% oder mehr Silica enthält, eine durchschnittliche Glasübergangstemperatur des Kautschukbestandteils -50 °C oder weniger beträgt, eine Kautschukhärte bei -20 °C Hc$_{M20}$ ist; und eine Zugspannung (MPa) bei 300 % Dehnung bei 23 °C Sc ist; und Verhältnis (5) erfüllt ist:

$$9,0 < Hc_{M20}/Sc < 10,5 \qquad \ldots (5)$$

   wobei Hc$_{M20}$ die Kautschukhärte der Gummizusammensetzung für einen Reifen bei -20 °C darstellt und Sc die Zugspannung (MPa) der Gummizusammensetzung für einen Reifen bei 300 % Dehnung bei 23 °C darstellt, wobei die Kautschukhärte bei -20 °C gemäß JIS K6253 unter Verwendung eines Durometers des Typs A bei einer Temperatur von -20 °C gemessen wird.

**2.** Gummizusammensetzung für einen Reifen nach Anspruch 1, wobei 100 Massenteile der Gummikomponente zu 2 bis 20 Massenteilen ein aromatisch modifiziertes Terpenharz mit einem Erweichungspunkt von 60 bis 150 °C enthalten.

**3.** Gummizusammensetzung für einen Reifen nach Anspruch 1 oder 2, wobei 100 Massenteile der Gummikomponente ferner zu 5 bis 30 Massenteilen ein flüssiges Polymer enthalten.

**4.** Spikereifen, der einen Laufflächenabschnitt umfasst, der die Gummizusammensetzung für einen Reifen nach einem der Ansprüche 1 bis 3 umfasst.

**Revendications**

**1.** Composition de caoutchouc pour un pneu, comprenant :

100 parties en masse d'un composant de caoutchouc contenant du caoutchouc naturel, du caoutchouc butadiène et du caoutchouc styrène-butadiène, la teneur totale en caoutchouc styrène-butadiène et en caoutchouc butadiène va de 15 à 65 % en masse et le rapport $W_{SBR}/W_{BR}$ de la teneur en caoutchouc styrène-butadiène $W_{SBR}$ à la teneur en caoutchouc butadiène $W_{BR}$ va de 2/8 à 6/4,
le composant de caoutchouc contenant de 5 à 35 parties en masse de noir de carbone ayant une surface spécifique d'adsorption d'azote allant de 50 à 120 m$^2$/g, et de 40 à 100 parties en masse de silice ayant une surface spécifique CTAB de 80 à 190 m$^2$/g, dans laquelle
un total de 100 % en masse de charge contenant le noir de carbone et la silice contient 70 % en masse ou plus de la silice, une température de transition vitreuse moyenne du composant de caoutchouc est de -50 °C ou plus basse, une dureté de caoutchouc à -20 °C est Hc$_{M20}$, et une contrainte de traction (MPa) à 300 % d'allongement à 23 °C est Sc ; et la relation (5) est respectée :

$$9,0 < Hc_{M20}/Sc < 10,5 \qquad \ldots(5)$$

où Hc$_{M20}$ représente la dureté de caoutchouc de la composition de caoutchouc pour un pneu à -20 °C et Sc représente la contrainte de traction (MPa) de la composition de caoutchouc pour un pneu à 300 % d'allongement à 23 °C, dans laquelle la dureté de caoutchouc à -20 °C est mesurée conformément à JIS K6253 avec l'utilisation d'un duromètre de type A à une température de -20 °C.

**2.** Composition de caoutchouc pour un pneu selon la revendication 1, dans laquelle 100 parties en masse du composant de caoutchouc contiennent de 2 à 20 parties en masse d'une résine terpénique à modification aromatique ayant un point de ramollissement de 60 à 150 °C.

**3.** Composition de caoutchouc pour un pneu selon la revendication 1 ou 2, dans laquelle 100 parties en masse du composant de caoutchouc contiennent en outre de 5 à 30 parties en masse d'un polymère liquide.

**4.** Pneu clouté comprenant une partie bande de roulement comprenant la composition de caoutchouc pour un pneu selon l'une quelconque des revendications 1 à 3.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010070052 A
- NO 132140
- JP S60259504 A
- JP 2016183268 A
- JP 2016199707 A
- JP 2016006139 A
- JP 2016047888 A
- JP H09226312 B
- JP 550 A